(19) **Europäisches Patentamt**
**European Patent Office**
**Office européen des brevets**

(11) **EP 3 075 622 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(51) Int Cl.:
**B61D 17/02** *(2006.01)* **B61D 27/00** *(2006.01)*

(21) Anmeldenummer: **15162266.9**

(22) Anmeldetag: **01.04.2015**

(54) **FAHRZEUG MIT EINEM AN DER FAHRZEUGOBERFLÄCHE MÜNDENDEN LUFTKANAL**

VEHICLE COMPRISING AN AIR DUCT THAT DISCHARGES AT THE SURFACE OF THE VEHICLE

VÉHICULE ÉQUIPÉ D'UNE GAINE D'AÉRATION DÉBOUCHANT À LA SURFACE DU VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.10.2016 Patentblatt 2016/40**

(73) Patentinhaber: **Bombardier Transportation GmbH 10785 Berlin (DE)**

(72) Erfinder:
• **Gölz, Peter**
**10117 Berlin (DE)**
• **Martens, Carsten**
**14478 Potsdam (DE)**

• **Stahnke, Susann**
**16540 Hohen Neuendorf (DE)**
• **Mauss, Johannes**
**10439 Berlin (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A1- 1 547 897 EP-A2- 2 700 552**
**DE-B3-102008 026 877 JP-A- H05 270 402**
**US-A- 2 195 599**

EP 3 075 622 B1

**Beschreibung**

HINTERGRUND DER ERFINDUNG

Die vorliegende Erfindung betrifft ein Fahrzeug, insbesondere ein Schienenfahrzeug für den Hochgeschwindigkeitsverkehr, mit einem Wagenkasten und einem Luftkanal zum Leiten eines ersten Luftstroms in dem Wagenkasten, wobei der Luftkanal eine Auslassöffnung aufweist, die in einem Auslassbereich an einer im Betrieb des Fahrzeugs durch einen zweiten Luftstrom überströmten Oberfläche des Wagenkastens in eine Umgebung des Wagenkastens mündet.

Ein solches Fahrzeug ist z.B. aus der US 2 195 599 A, der EP 1 547 897 A1 oder der JP H05 270402 A bekannt.

Bei der Klimatisierung oder Luftkühlung von Komponenten moderner Schienenfahrzeuge mit vergleichsweise hohen Nennbetriebsgeschwindigkeiten besteht in der Regel das Problem, dass die Ansaugung von Frischluft in das Fahrzeug bzw. die Ausblasung von Fortluft aus dem Fahrzeug in der Regel im Bereich der luftüberströmten Außenhaut von des Fahrzeugs erfolgen muss, sofern aufwändige bzw. strömungstechnisch ungünstige Anbauten und/oder aufwändige Luftführung über weite Strecken etc. vermieden werden sollen. Dies gilt insbesondere für kleinere, dezentrale Klimatisierungseinheiten, wie beispielsweise diejenigen für die Klimatisierung des Führerstandes an den Fahrzeugköpfen.

Bei solchen dezentralen Klimatisierungseinheiten erfolgt die Ansaugung und Ausblasung häufig im Bereich der Seitenwand und/oder der Unterseite des Fahrzeugs. An den üblicherweise für die Ansaugung und Ausblasung verwendeten Positionen können, insbesondere bei Schienenfahrzeugen für den Hochgeschwindigkeitsverkehr mit Nennbetriebsgeschwindigkeiten weit oberhalb von 250 km/h, in der Regel jedoch ungünstige Strömungsverhältnisse vorliegen, bei denen gegebenenfalls sogar der Luftdruck (insbesondere der statische Luftdruck) im Bereich der Ausblasstelle größer ist als derjenige an der Ansaugstelle.

Solche ungünstige Strömungsverhältnisse können sich insbesondere im Fall von starkem Seitenwind ergeben, bei dem es gerade im Kopfbereich des Fahrzeugs zu einer stark verzerrten bzw. ungleichmäßigen Anströmung der Fahrzeugoberfläche mit je nach der Richtung des Seitenwindes stark unterschiedlichen Druckverhältnissen im Bereich der Ausblasstelle bzw. der Ansaugstelle kommt.

Solche möglichen ungünstigen Luftdruckverhältnisse bedingen, dass in erheblichem Maße zusätzliche Energie für die aktive Förderung eines ausreichend hohen Luftvolumenstromes durch die Klimatisierungseinheit selbst vorgehalten werden muss, mithin also deren Lüfter entsprechend groß dimensioniert sein müssen, um die eventuell erforderliche Förderleistung erbringen zu können.

KURZE BESCHREIBUNG DER ERFINDUNG

Der vorliegenden Erfindung liegt daher die Aufgabe zu Grunde, ein Fahrzeug der eingangs genannten Art zur Verfügung zu stellen, welches die oben genannten Nachteile nicht oder zumindest in geringerem Maße mit sich bringt und insbesondere auf einfache Weise in seinem gesamten Betriebsspektrum, mithin auch bei den im Normalbetrieb zu erwartenden Anströmungsverhältnissen, eine Reduzierung des Aufwands für die Luftführung im Fahrzeug ermöglicht.

Die vorliegende Erfindung löst diese Aufgabe ausgehend von einem Fahrzeug gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man auf einfache Weise im gesamten Betriebsspektrum des Fahrzeugs, mithin auch bei sämtlichen im Normalbetrieb zu erwartenden Anströmungsverhältnissen, eine Reduzierung des Aufwands für die Luftführung im Fahrzeug ermöglicht, wenn man die Auslassöffnung im Bereich eines im Wesentlichen konvex geformten Übergangs der Oberfläche in eine Einbuchtung der Oberfläche legt. An einem solchen Übergang ist es in vorteilhafter Weise möglich, bei sämtlichen zu erwartenden Anströmungsverhältnissen im Normalbetrieb eine geeignete Strömungsumlenkung und damit einen ausreichend hohen Unterdruck gegenüber der Umgebung und insbesondere gegenüber einer Einlassöffnung des Luftführungssystems zu erzielen, welche die Luftförderung in der gewünschten Förderrichtung unterstützt. Mithin ist es hiermit also auf rein passive Weise möglich, die erforderliche aktive Förderleistung des Luftführungssystems zu reduzieren bzw. auf einem niedrigen Niveau zu halten.

So taucht der die Fahrzeugoberfläche im Bereich der Einbuchtung überströmende (zweite) Luftstrom am vorlaufenden Ende der Einbuchtung mehr oder weniger stark in die Einbuchtung ein bzw. tritt am nachlaufenden Ende wieder aus der Einbuchtung heraus. Hierbei erfolgt am jeweiligen Ende der Einbuchtung eine entsprechende Strömungsumlenkung, die zu einem (entsprechend dem Grad der Strömungsumlenkung) mehr oder weniger stark abgesenkten statischen Druck auf der Fahrzeugoberfläche führt. Wird die Auslassöffnung im Bereich eines derart abgesenkten statischen Drucks angeordnet, so kann der abgesenkte statische Druck in vorteilhafter Weise zur Luftförderung im Luftkanal genutzt werden bzw. trägt er automatisch dazu bei.

Es sei an dieser Stelle erwähnt, dass der die Fahrzeugoberfläche im Bereich der Einbuchtung überströmende (zweite) Luftstrom nicht notwendiger Weise auch im (in Strömungsrichtung) mittleren Bereich der Einbuchtung kontinuierlich an der Fahrzeugoberfläche anliegen muss. Es genügt vielmehr, dass der Luftstrom im Bereich der Strömungsumlenkung und der dort angeordneten Auslassöffnung an der Fahrzeugoberfläche anliegt. So kann beispielsweise vorgesehen sein, dass sich der Luftstrom nach Überstreichen eines vorlaufenden Endes der Einbuchtung (an dem der Strömungsumlenkungsbereich mit der Auslassöffnung liegt) von der Fahrzeugoberfläche ablöst. Ebenso kann bei Anordnung der Auslassöffnung an einem nachlaufenden Ende der Einbuchtung vorgesehen sein, dass der Luftstrom im (in Strömungsrichtung) mittleren Bereich der Einbuchtung zunächst von der Fahrzeugoberfläche abgelöst ist, sich aber vor Überstreichen des nachlaufenden Endes (an dem der Strömungsumlenkungsbereich mit der Auslassöffnung liegt) wieder an die Fahrzeugoberfläche anlegt.

Es sei an dieser Stelle weiterhin erwähnt, dass die Auslassöffnung ein oder mehrere Durchlassöffnungen für den zu fördernden (ersten) Luftstrom aufweist. Die jeweilige Durchlassöffnung ist dabei bevorzugt so gestaltet, dass es an ihr zu keiner dauerhaften lokalen Ablösung des (zweiten) Luftstroms unter Ausbildung einer ausgeprägten turbulenten Scherschicht (mit der damit einhergehenden Erhöhung des statischen Drucks) kommt. Vielmehr ist die jeweilige Durchlassöffnung bevorzugt so gestaltet, dass der (zweite) Luftstrom sie ohne Ausbildung einer solchen ausgeprägten turbulenten Scherschicht einfach überspringt und sich danach wieder an die Fahrzeugoberfläche anlegt.

Hierzu kann beispielsweise vorgesehen sein, dass die Auslassöffnung durch ein gitterartiges oder grillartiges Auslasselement mit einer Vielzahl von Durchlassöffnungen gebildet ist. Das Auslasselement bildet dann in diesem Bereich die Fahrzeugoberfläche. Das Auslasselement kann beispielsweise nach Art eines Lochblechs gestaltet sein, wobei die Durchlassöffnungen beispielsweise polygonal, elliptisch, kreisrund oder schlitzartig ausgebildet sein können. Die Schlitze der Durchlassöffnungen sind dabei bevorzugt langgestreckt ausgebildet und quer zur Anströmrichtung bzw. Fahrtrichtung angeordnet, sodass der (zweite) Luftstrom nur eine vergleichsweise kurze Lücke in der Außenhaut überbrücken bzw. überspringen muss, bis er sich wieder an die Außenhaut anlegen kann.

Eine entsprechend geeignete Einbuchtung kann beispielsweise im Bereich eines Fahrwerksausschnitts im Wagenkasten, am Übergang zwischen zwei miteinander gekoppelten Wagenkästen oder aber auch im Bereich beliebiger anderer Einbuchtungen vorliegen. Gegebenenfalls kann die Gestaltung der Einbuchtung speziell für diesen Anwendungsfall, also die Unterstützung der Luftförderung optimiert werden oder sogar explizit erst zu diesem Zweck vorgesehen werden.

Gemäß einem Aspekt betrifft die vorliegende Erfindung daher ein Fahrzeug, insbesondere ein Schienenfahrzeug für den Hochgeschwindigkeitsverkehr, mit einem Wagenkasten und einem Luftkanal zum Leiten eines ersten Luftstroms in dem Wagenkasten, wobei der Luftkanal eine Auslassöffnung aufweist, die in einem Auslassbereich an einer im Betrieb des Fahrzeugs durch einen zweiten Luftstrom überströmten Oberfläche des Wagenkastens in eine Umgebung des Wagenkastens mündet. Die Auslassöffnung ist im Bereich eines im Wesentlichen konvex geformten Übergangs der Oberfläche in eine Einbuchtung der Oberfläche angeordnet.

Der Übergang kann grundsätzlich an beliebiger geeigneter Stelle im Bereich der Einbuchtung vorgesehen sein, an der eine entsprechende Strömungsumlenkung mit der entsprechenden Absenkung des statischen Luftdrucks im zweiten Luftstrom erfolgt. Bei der Anordnung der Einbuchtung im Bereich einer Seitenwand des Fahrzeugs kann der Übergang beispielsweise im Bereich eines in einer Fahrzeughöhenrichtung verlaufenden Randbereichs der Einbuchtung angeordnet sein. Vorzugsweise ist die Einbuchtung im Bereich einer Fahrzeugoberseite oder einer Fahrzeugunterseite angeordnet, wobei der Übergang dann bevorzugt im Bereich eines in einer Fahrzeugquerrichtung verlaufenden Randbereichs der Einbuchtung angeordnet ist.

Weiterhin kann der Übergang sowohl an einem in einer Fahrzeuglängsrichtung vorlaufenden Randbereich als auch an einem in der Fahrzeuglängsrichtung nachlaufenden Randbereich der Einbuchtung angeordnet sein. Insbesondere wenn das Fahrzeug primär oder sogar ausschließlich in einer bestimmten Fahrtrichtung betrieben werden, so liegt der Übergang vorzugsweise im Bereich eines nachlaufenden Randbereichs der Einbuchtung.

Bei bevorzugten Varianten der Erfindung, welche sowohl hinsichtlich einer Verschmutzung des Luftkanals als auch hinsichtlich einer Beeinträchtigung der Strömung auf der Außenhaut des Fahrzeuges sowie dessen Herstellung besonders günstige Eigenschaften aufweisen, zeichnen sich dadurch aus, dass die Auslassöffnung in einem in einer Fahrzeughöhenrichtung unteren Bereich der des Wagenkastens angeordnet ist. Vorzugsweise ist die Auslassöffnung hierbei auf einer Unterseite des Wagenkastens angeordnet ist.

Bei der Einbuchtung kann es sich wie erwähnt um eine beliebige Einbuchtung handeln, welche eine beliebige Funktion im bzw. am Fahrzeug erfüllt. Vorzugsweise handelt es sich bei der Einbuchtung um einen Fahrwerksausschnitt für ein Fahrwerk des Fahrzeugs. In diesem Fall kann der Übergang wiederum an einem in einer Fahrzeuglängsrichtung vorlaufenden oder nachlaufenden Randabschnitt des Fahrwerksausschnitts angeordnet sein, da sich hier nicht zuletzt besonders günstige Platzverhältnisse für die Anordnung der Auslassöffnung ergeben.

Hierbei definiert der Wagenkasten in der Regel eine Längsmittenebene, die sich in einer Fahrzeuglängsrichtung und einer Fahrzeughöhenrichtung erstreckt, wobei sich der Fahrwerksausschnitt im Bereich des Übergangs in einer Fahrzeugquerrichtung über eine Ausschnittsbreite erstreckt. Die Auslassöffnung definiert weiterhin eine Auslassfläche mit einem Auslassflächenschwerpunkt, wobei der Auslassflächenschwerpunkt in der Fahrzeugquerrichtung einen Auslassschwerpunktabstand von der Längsmittenebene aufweist, der bevorzugt 10% bis 50% der Ausschnittsbreite beträgt, vorzugsweise 20% bis 45% der Ausschnittsbreite beträgt, weiter vorzugsweise 30% bis 40% der Ausschnittsbreite beträgt.

Eine solche von der Längsmittenebene beabstandete Anordnung trägt in vorteilhafter Weise dem Umstand Rechnung, dass sich bei herkömmlich gestalteten Fahrwerken in den weiter seitlich bzw. weiter außen gelegenen Bereichen im Fahrwerksausschnitt im Hinblick auf die gewünschte Absenkung des statischen Luftdrucks im Bereich der Auslassöffnung günstigere Strömungsverhältnisse ergeben als im Bereich der Längsmittenebene.

Es versteht sich jedoch, dass der Auslassflächenschwerpunkt bei anderen Varianten der Erfindung auch an anderen Stellen entlang der Fahrzeugquerrichtung vorgesehen sein kann. Insbesondere kann der Auslassflächenschwerpunkt im Wesentlichen mittig liegen, d.h. in der Nähe der Längsmittenebene, gegebenenfalls auch im Wesentlichen in der Längsmittenebene. Maßgeblich ist lediglich die im Normalbetrieb im Bereich der Auslassöffnung vorherrschende Absenkung des statischen Luftdrucks bzw. die statische Druckdifferenz zur Einlassöffnung des Luftführungssystems.

So kann gegebenenfalls auch im gesamten Bereich über die Fahrzeugquerrichtung eine entsprechende Absenkung des statischen Luftdrucks gegeben sein. Welche Position genutzt wird, hängt dann unter anderem von der Position der Einlassöffnung des Luftführungssystems bzw. den dort herrschenden statischen Druckverhältnissen ab.

Die Abmessungen der Auslassöffnung können grundsätzlich in Abhängigkeit von dem zu erzielenden Volumenstrom der ersten Luftströmung beliebig groß gewählt sein. Bei bevorzugten Varianten der Erfindung erstreckt sich der Fahrwerksausschnitt im Bereich des Übergangs in einer Fahrzeugquerrichtung über eine Ausschnittsbreite, wobei die Auslassöffnung in der Fahrzeugquerrichtung eine maximale Auslassbreite definiert und die die maximale Auslassbreite 5% bis 30% der Ausschnittsbreite beträgt, vorzugsweise 10% bis 25% der Ausschnittsbreite beträgt, weiter vorzugsweise 15% bis 20% der Ausschnittsbreite beträgt.

Weiter vorzugsweise definiert die Auslassöffnung in einer Fahrzeugquerrichtung eine maximale Auslassbreite definiert, wobei die Auslassöffnung in einer Fahrzeuglängsrichtung eine maximale Auslasslänge definiert und die maximale Auslassbreite 120% bis 320% der maximalen Auslasslänge beträgt, vorzugsweise 160% bis 280% der maximalen Auslasslänge beträgt, weiter vorzugsweise 200% bis 240% der maximalen Auslasslänge beträgt. Hiermit lassen sich besonders günstige Konfigurationen erzielen, bei denen schon mit vergleichsweise geringem statischem Unterdruck im Bereich der Auslassöffnung eine vergleichsweise gute Unterstützung der Förderung größerer Volumenströme erzielt werden kann.

Bei typischen vorteilhaften Ausgestaltungen der Erfindung im Bereich des Hochgeschwindigkeitsverkehrs beträgt die maximale Auslassbreite 300 mm bis 600 mm beträgt, vorzugsweise 350 mm bis 550 mm beträgt, weiter vorzugsweise 400 mm bis 500 mm beträgt. Die maximale Auslasslänge liegt dann entsprechend im Bereich von 100 mm bis 300 mm, vorzugsweise im Bereich von 150 mm bis 250 mm, weiter vorzugsweise im Bereich von 180 mm bis 220 mm .

Wie bereits erwähnt, kann der Auslassflächenschwerpunkt im Bereich eines Fahrwerksausschnitts grundsätzlich an beliebigen geeigneten Stellen entlang der Fahrzeugquerrichtung vorgesehen sein. Insbesondere kann er im Wesentlichen mittig liegen. Bei weiteren Varianten ist die Auslassöffnung im Bereich eines Fahrwerksausschnitts bevorzugt seitlich der Längsmittenebene angeordnet. Bei bestimmten bevorzugten Varianten der Erfindung ist in dem Bereich des Fahrwerksausschnitts ein Fahrwerk mit wenigstens einer Radeinheit mit zwei Rädern angeordnet und der Wagenkasten definiert eine Längsmittenebene, die sich in einer Fahrzeuglängsrichtung und einer Fahrzeughöhenrichtung erstreckt. Die Auslassöffnung definiert wiederum eine Auslassfläche mit einem Auslassflächenschwerpunkt, wobei der Auslassflächenschwerpunkt in einer Fahrzeugquerrichtung weiter von der Längsmittenebene entfernt angeordnet ist als ein Radaufstandspunkt des unmittelbar benachbarten Rades der Radeinheit.

Bei diesen Varianten liegt der Auslassflächenschwerpunkt in der Fahrzeugquerrichtung weiter außen als der Radaufstandspunkt des unmittelbar benachbarten Rades, so dass auch zumindest ein überwiegender Teil der Auslassöffnung außerhalb des Windschattens des unmittelbar benachbarten Rades liegt. Hierdurch ergeben sich im Hinblick auf die gewünschte Absenkung des statischen Luftdrucks im Bereich der Auslassöffnung besonders günstige Strömungsverhältnisse. Besonders günstig ist es hierbei, wenn wenigstens 60% der Auslassfläche, vorzugsweise wenigstens 80% der Auslassfläche, weiter vorzugsweise wenigstens 90% der Auslassfläche, in der Fahrzeugquerrichtung weiter von der Längsmittenebene entfernt angeordnet sind als der Radaufstandspunkt des unmittelbar benachbarten Rades der Radeinheit.

Je nach Gestaltung, Größe und Geometrie der Auslassöffnung kann es sich bei der Auslassöffnung gegebenenfalls um eine einzige Öffnung in der Außenhaut des Wagenkastens bzw. Fahrzeugs handeln, welche von dem zweiten Luftstrom überströmt wird. Hierbei ist bevorzugt wiederum auf die bereits erwähnten, zur gewünschten Absenkung des statischen Luftdrucks erforderlichen Strömungsverhältnisse (Vermeidung einer ausgeprägten turbulenten Scherschicht etc.) in dem zweiten Luftstrom beim Überströmen der Auslassöffnung zu achten.

Vorzugsweise ist die Auslassöffnung durch wenigstens ein Auslasselement gebildet, welches wenigstens eine Durchlassöffnung, vorzugsweise mehrere Durchlassöffnungen, für den ersten Luftstrom aufweist. Bevorzugt ist das Auslasselement insbesondere derart ausgebildet, dass der zweite Luftstrom die Durchlassöffnung in einem Normalbetrieb des Fahrzeugs bei seiner Nennbetriebsgeschwindigkeit ohne Ausbildung einer ausgeprägten turbulenten Scherschicht überspringt und sich danach unmittelbar wieder an das Auslasselement anlegt. Hierdurch wird eine im Wesentlichen ungestörte Strömung in dem zweiten Luftstrom erzielt, welcher die (zur Absenkung des statischen Luftdrucks) erforderliche Strömungsumlenkung im Bereich des Übergangs erfährt.

Das Auslasselement kann hierzu grundsätzlich auf beliebige geeignete Weise gestaltet sein. So kann es beispielsweise netzartig mit einer Vielzahl kleiner Durchlassöffnungen gestaltet sein. Vorzugsweise ist das Auslasselement gitterartig oder grillartig mit einer Vielzahl von Durchlassöffnungen ausgebildet, da hiermit besonders günstige bzw. geringe Druckverluste beim Durchtritt des ersten Luftstrom durch die Durchlassöffnungen erzielt werden kann.

Die Durchlassöffnungen können grundsätzlich auf beliebige geeignete Weise gestaltet sein. Vorzugsweise ist die betreffende Durchlassöffnung mit zumindest abschnittsweise polygonaler Außenkontur und/oder zumindest abschnittsweise gekrümmter Außenkontur ausgebildet. Weiterhin ist bevorzugt vorgesehen, dass die Durchlassöffnung als langgestreckte schlitzartige Öffnung mit einer Haupterstreckungsrichtung ausgebildet ist, die quer zu dem zweiten Luftstrom, insbesondere quer zu einer Fahrtrichtung des Fahrzeugs, verläuft. Hierdurch wird in vorteilhafter Weise eine Gestaltung erzielt, bei welcher der zweite Luftstrom nur in vergleichsweise kurze Strecke (quer zur Haupterstreckungsrichtung der Durchlassöffnung) überspringen bzw. überbrücken muss, sodass es in vorteilhafter Weise zu keiner Ausbildung einer ausgeprägten turbulenten Scherschicht kommt.

Der Übergang kann grundsätzlich auf beliebige geeignete Weise gestaltet sein. Vorzugsweise ist der Übergang durch einen ersten Oberflächenabschnitt und einen zweiten Oberflächenabschnitt definiert, wobei der zweite Oberflächenabschnitt einen Teil der Einbuchtung bildet und der zweite Oberflächenabschnitt nach Art einer Fase um einen spitzen Neigungswinkel zu dem ersten Oberflächenabschnitt geneigt angeordnet ist.

Eine solche Gestaltung nach Art einer Fase hat insbesondere bei einer Anordnung der Auslassöffnung an einem nachlaufenden Ende der Einbuchtung den Vorteil, dass sich eine Scherschicht, welche sich eventuell im Bereich der Einbuchtung (aufgrund einer Strömungsablösung von der Fahrzeugaußenhaut) ausbildet, zunächst (je nach gewähltem Neigungswinkel) vergleichsweise sanft und damit schnell an den zur Mitte der Einbuchtung hin geneigten zweiten Oberflächenabschnitt anlegen kann. Im Bereich des Übergangs mit der Auslassöffnung kann dann besonders zuverlässig eine im Hinblick auf die Absenkung des statischen Luftdrucks günstige Strömungsumlenkung in dem zweiten Luftstrom erzielt werden.

Bei bevorzugten Varianten des erfindungsgemäßen Fahrzeugs wird der Übergang durch einen ersten Oberflächenabschnitt und einen zweiten Oberflächenabschnitt definiert, wobei der zweite Oberflächenabschnitt einen Teil der Einbuchtung bildet. Der erste Oberflächenabschnitt definiert eine lokale erste Tangentialebene und eine lokale erste Flächennormale, während der zweite Oberflächenabschnitt eine lokale zweite Tangentialebene und eine lokale zweite Flächennormale definiert. Die lokale erste Flächennormale definiert mit der lokalen zweiten Flächennormale eine lokale Normalebene definiert. Der zweite Oberflächenabschnitt ist um einen spitzen Neigungswinkel zu dem ersten Oberflächenabschnitt geneigt angeordnet, wobei der spitze Neigungswinkel vorzugsweise 10° bis 80° beträgt. Bevorzugt beträgt der spitze Neigungswinkel 30° bis 60° beträgt, weiter vorzugsweise 40° bis 50°, insbesondere im Wesentlichen 45°. Durch eine derartige Gestaltung lässt sich insbesondere das oben bereits beschriebene sanfte und schnelle Wiederanlegen der zweiten Strömung an den zweiten Oberflächenabschnitt erzielen, bevor die Auslassöffnung überstrichen wird.

Hierbei in ist anzumerken, dass die jeweilige Tangente an die lokale Geometrie der Außenhaut bzw. Fahrzeugoberfläche nicht notwendigerweise in jedem Punkt exakt mit der Tangentialebene zusammenfallen muss. Vielmehr sind lokale Abweichungen im Bereich der Außenhaut möglich (die beispielsweise durch Unregelmäßigkeiten der Außenhaut in Form von lokalen Rippen, Kanten oder Dellen etc. bedingt sind). Es muss lediglich gewährleistet sein, dass diese lokalen Abweichungen keine nennenswerten Auswirkungen auf den globalen Strömungsverlauf des zweiten Luftstroms im grenzschichtnahen Bereich haben.

Der Luftkanal kann grundsätzlich Bestandteil beliebiger Einrichtungen sein, welche Luft aus dem Fahrzeuginneren heraus fördern. Vorzugsweise ist der Luftkanal Bestandteil einer Lüftungseinrichtung, welche ihrerseits bereits über eine entsprechende Einrichtung Luft aus der Umgebung des Fahrzeugs ansaugt.

Bei bestimmten Varianten der Erfindung, bei denen das Fahrzeug in einem Normalbetrieb bei einer Nennbetriebsgeschwindigkeit betrieben wird, ist der Luftkanal ein Fortluftkanal einer Lüftungseinrichtung, die wiederum einen Frischluftkanal aufweist. Der Frischluftkanal weist eine Einlassöffnung auf, die an einer Oberfläche des Wagenkastens in eine Umgebung des Wagenkastens mündet, welche in dem Normalbetrieb des Fahrzeugs durch einen dritten Luftstrom überströmt wird. Die Einlassöffnung weist eine Einlassfläche auf, an der in dem Normalbetrieb ein mittlerer Einlassluftdruck herrscht, während die Auslassöffnung eine Auslassfläche aufweist, an der in dem Normalbetrieb ein mittlerer Auslassluftdruck herrscht. Die Einlassöffnung und die Auslassöffnung sind derart angeordnet, dass in dem Normalbetrieb eine negative Druckdifferenz

$$\Delta p_{AE} = p_{Auslass} - p_{Einlass} \tag{1}$$

zwischen dem mittleren Auslassluftdruck $p_{Auslass}$ und dem mittleren Einlassluftdruck $p_{Einlass}$ vorliegt. Hierdurch kann in vorteilhafter Weise sichergestellt werden, dass alleine die negative Druckdifferenz zwischen Einlass und Auslass ausreichen kann, um Luft durch das Kanalsystem zu fördern. Hierdurch kann der Aufwand für aktive Einrichtungen zur Luftförderung durch die Lüftungseinrichtung gering gehalten werden,

Der Absolutbetrag $|\Delta p_{AE}|$ der Druckdifferenz $\Delta p_{AE}$ beträgt vorzugsweise mindestens 20 Pa, weiter vorzugsweise mindestens 40 Pa, weiter vorzugsweise mindestens 50 Pa. Bei bestimmten Varianten der Erfindung beträgt der Absolutbetrag $|\Delta p_{AE}|$ der Druckdifferenz $\Delta p_{AE}$ bevorzugt 20 Pa bis 1500 Pa, vorzugsweise 40 Pa bis 1400 Pa, weiter vorzugsweise 50 Pa bis 1300 Pa. Hiermit lassen sich besonders günstige Konfigurationen mit minimiertem Zusatzaufwand für aktive Einrichtungen zur Förderung von Luft durch die Lüftungseinrichtung erzielen.

Die Einlassöffnung kann grundsätzlich ein beliebiger geeigneter Stelle im bzw. am Fahrzeug angeordnet sein. Bevorzugt ist die Einlassöffnung im Bereich einer Seitenfläche des Wagenkastens angeordnet, die in eine Fahrzeugquerrichtung weist. Diese Gestaltung hat insbesondere den Vorteil, dass sich (insbesondere bei Fahrzeugen für den Hochgeschwindigkeitsverkehr) im Bereich der Einlassöffnung günstige Strömungsverhältnisse zur Erzielung der gewünschten negativen Druckdifferenz $\Delta p_{AE}$ zwischen Auslass und Einlass erzielen lassen.

Bevorzugt ist die Einlassöffnung in einer Fahrzeughöhenrichtung oberhalb der Einbuchtung angeordnet ist. Zusätzlich oder alternativ ist die Einlassöffnung bevorzugt in einer Fahrzeuglängsrichtung im Bereich der Einbuchtung, insbesondere zwischen einem vorlaufenden Ende und einem nachlaufenden Ende der Einbuchtung, angeordnet. Hierdurch lassen sich besonders günstige Konfigurationen mit kurzen Fördererwegen und damit entsprechend geringen Druckverlusten bei der Luftförderung durch die Lüftungseinrichtung erzielen.

Bei bevorzugten Varianten der Erfindung ist der Luftkanal ein Fortluftkanal einer Klimatisierungseinrichtung für einen Innenraum des Wagenkastens, wobei die Klimatisierungseinrichtung insbesondere im Bereich eines Kopfendes des Wagenkastens angeordnet ist. Dabei kann die Klimatisierungseinrichtung einem Führerstand des Wagenkastens zugeordnet sein, da ihre Vorteile gerade bei solchen kompakten kleineren Einheiten, wie sie zur Klimatisierung eines Führerstands vorgesehen sind, besonders gut zum Tragen kommen.

Die vorliegende Erfindung kann im Zusammenhang mit beliebigen Fahrzeugen für beliebige Einsatzzwecke bzw. mit beliebigen Nennbetriebsgeschwindigkeiten zum Einsatz kommen. Vorzugsweise handelt es sich bei dem Fahrzeug um ein Fahrzeug für den Hochgeschwindigkeitsverkehr mit einer Nennbetriebsgeschwindigkeit oberhalb von 250 km/h, insbesondere oberhalb von 300 km/h, insbesondere von 320 km/h bis 390 km/h, da hier aufgrund der hohen Fahrgeschwindigkeit ungünstige Druckverhältnisse bei der Luftförderung aus dem Fahrzeug heraus besonders massive Auswirkungen haben können bzw. entsprechend groß dimensionierte aktive Förderereinrichtungen erforderlich machen können. Demgemäß kann gerade hier mit der vorliegenden Erfindung eine erhebliche Aufwandsersparnis erzielt werden.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt.

KURZE BESCHREIBUNG DER ZEICHNUNGEN

Figur 1  ist eine schematische Seitenansicht eines Teils einer bevorzugten Ausführungsform des erfindungsgemäßen Fahrzeugs.

Figur 2  ist eine schematische Ansicht des Fahrzeugs aus Figur 1 von unten (in der Ebene II-II aus Figur 1).

Figur 3  ist eine vergrößerte Ansicht des Details III aus Figur 2.

DETAILLIERTE BESCHREIBUNG DER ERFINDUNG

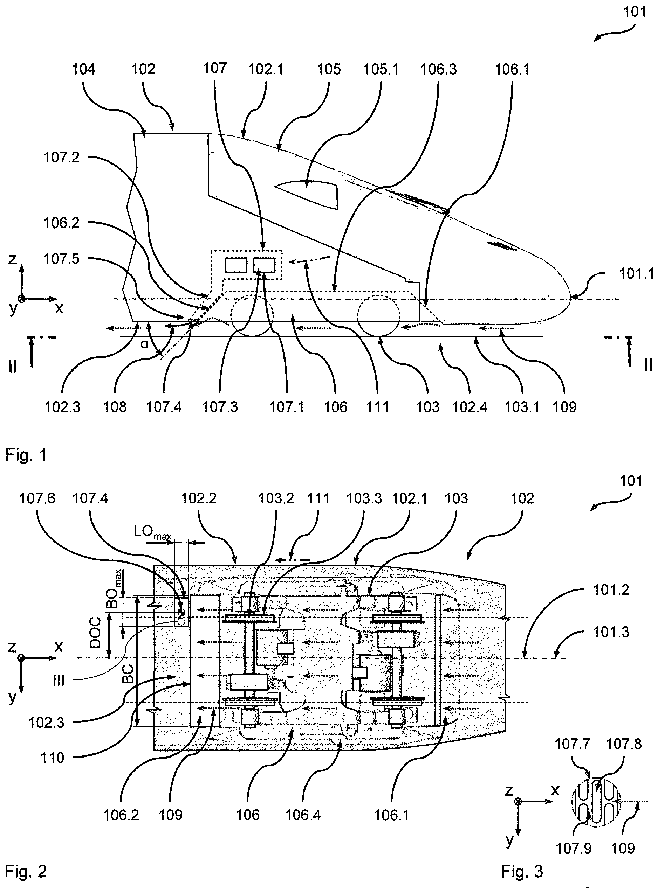

Im Folgenden wird unter Bezugnahme auf die Figuren 1 bis 3 ein bevorzugtes Ausführungsbeispiel des erfindungsgemäßen Fahrzeugs in Form eines Schienenfahrzeugs 101 beschrieben. Bei dem Schienenfahrzeug 101 handelt es sich um einen Endwagen eines Triebzugs für den Hochgeschwindigkeitsverkehr, dessen Nennbetriebsgeschwindigkeit oberhalb von 250 km/h, nämlich bei $v_n$ = 380 km/h, liegt.

Es sei an dieser Stelle angemerkt, dass die nachfolgenden Ausführungen für einen Strömungszustand bei Fahrt des Fahrzeugs 101 mit konstanter Nennbetriebsgeschwindigkeit im geraden ebenen Gleis ohne die Einflüsse von Seitenwind oder dergleichen gemacht werden, sofern keine expliziten anderweitigen Angaben gemacht werden. Es versteht sich, dass sich bei einer Abweichung von diesem Betriebszustand (beispielsweise infolge einer Kurvenfahrt oder von Seitenwind etc.) Abweichungen von den beschriebenen Strömungsverhältnissen, insbesondere den Strömungsrichtungen ergeben können, wobei jedoch die grundsätzlichen Feststellungen im Wesentlichen weiterhin gelten.

Das Fahrzeug 101 umfasst einen Wagenkasten 102, der eine Außenhaut 102.1 des Fahrzeugs 101 definiert. Der Wagenkasten 102 ist im Bereich seiner beiden Enden in herkömmlicher Weise jeweils auf einem Fahrwerk in Form eines Drehgestells 103 abgestützt ist. Es versteht sich jedoch, dass die vorliegende Erfindung auch in Verbindung mit anderen Konfigurationen eingesetzt werden kann, bei denen der Wagenkasten lediglich auf einem Fahrwerk abgestützt ist.

Zum einfacheren Verständnis der nachfolgenden Erläuterungen ist in den Figuren ein (durch die Radaufstandsebene 103.1 des Drehgestells 103 vorgegebenes) Fahrzeug-Koordinatensystem x,y,z angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Der Wagenkasten 102 weist einen Rumpfabschnitt 104 und einen daran anschließenden Kopfabschnitt 105 auf. In einem ersten Betriebsmodus mit einer ersten Fahrtrichtung bildet der Kopfabschnitt 105 das vorlaufende Ende des Zuges 101, während er in einem zweiten Betriebsmodus mit einer zur ersten Fahrtrichtung entgegengesetzten zweiten Fahrtrichtung das nachlaufende Ende des Zuges 101 bildet.

Der Rumpfabschnitt 104 weist (abgesehen von lokalen Ausnehmungen für funktionale Komponenten des Fahrzeugs, wie beispielsweise Stromabnehmer, Dachcontainer etc.) eine im Wesentlichen prismatische Gestaltung (mit entlang der Fahrzeuglängsrichtung im Wesentlichen identischen Schnittkonturen der Außenhaut 102.1) auf.

Demgegenüber verjüngt sich der Kopfabschnitt 105 sowohl in Fahrzeughöhenrichtung als auch in Fahrzeugquerrichtung zum Ende des Fahrzeugs 101 hin, sodass er im Betrieb des Fahrzeugs 101 ein freies Fahrzeugende des Fahrzeugs 101 bilden kann. Dabei ist in dem Kopfabschnitt 105 ein Abteil 105.1 für den Fahrzeugführer vorgesehen, von dem aus der Fahrzeugführer das Fahrzeug 101 steuert, wenn der Kopfabschnitt 105 in dem ersten Betriebsmodus des Fahrzeugs 101 das vorlaufende Ende 101.1 des Fahrzeugs 101 bildet (also die Fahrtrichtung in Richtung der positiven x-Achse weist, wovon im Folgenden ausgegangen wird, soweit keine expliziten anderweitigen Angaben gemacht werden).

Das Drehgestell 103 ist in einer Einbuchtung in Form eines Fahrwerksausschnitts 106 des Wagenkastens 102 angeordnet, der in dem ersten Betriebsmodus an seinem vorlaufenden Ende durch eine vorlaufende Begrenzungswand 106.1 und an seinem nachlaufenden Ende durch eine nachlaufende Begrenzungswand 106.2 begrenzt ist, die durch eine obere Begrenzungswand 106.3 miteinander verbunden sind. Zu beiden Fahrwerksseiten wird der Fahrwerksausschnitt 106 durch Schürzen 106.4 begrenzt.

Das Abteil 105.1 wird durch eine Lüftungseinrichtung in Form einer Klimaanlage 107 klimatisiert, die hierzu grundsätzlich in konventioneller Weise aufgebaut ist. So umfasst die Klimaanlage 107 unter anderem einen Luftbehandlungsteil sowie damit verbundene Luftkanäle für Frischluft, Zuluft, Abluft, Umluft und Fortluft (jeweils nicht näher dargestellt), über welche die entsprechenden Klimaparameter in dem Abteil 105.1 eingestellt werden. Weiterhin umfasst die Klimaanlage 107 einen Kältemittelkreislauf mit einer Kompressoreinheit und einer Wärmetauschereinheit (jeweils ebenfalls nicht näher dargestellt), in der Wärme aus dem Kältemittelkreislauf abgeführt wird.

Die Wärmeabfuhr aus dem Kältemittelkreislauf der Klimaanlage 107 erfolgt über ein Luftkanalsystem mit einem ersten Kühlluftkanal 107.1, über den Frischluft aus der Umgebung des Fahrzeugs 101 als Kühlluft angesaugt wird. Die Kühlluft wird über die Wärmetauschereinheit des Kältemittelkreislaufs geführt und dann als Fortluft über einen zweiten Kühlluftkanal 107.2 in Form eines ersten Luftstroms 108 aus dem Wagenkasten 102 herausgeführt.

Die Kühlluft gelangt über Einlassöffnungen 107.3, welche in der Seitenwand 102.2 des Wagenkastens 102 oberhalb des Fahrwerksausschnitts 106 ausgebildet sind, in den ersten Kühlluftkanal 107.1. Die Anordnung der Einlassöffnungen 107.3 im Bereich der Seitenwand 102.2 hat den Vorteil, dass dort ein vergleichsweise geringes Risiko besteht, stark verschmutzte Luft anzusaugen. In der Fahrzeuglängsrichtung sind die Einlassöffnungen 107.3 im Bereich bzw. auf dem Niveau des Fahrwerksausschnitts 106 (zwischen dem vorlaufenden Ende und dem nachlaufenden Ende des Fahrwerksausschnitts 106) angeordnet, wodurch kurze Leitungswege erzielt werden.

Die Abfuhr der Kühlluft als Fortluftstrom 108 aus dem zweiten Kühlluftkanal 107.2 in die Umgebung des Fahrzeugs 101 erfolgt ihrerseits über eine Auslassöffnung 107.4 des Kühlluftkanals 107.2, welche in einem Auslassbereich 107.5 angeordnet ist. Die Auslassöffnung 107.4 befindet sich dabei an einer im Betrieb des Fahrzeugs 101 durch einen (in den Figuren durch gepunktete Pfeile repräsentierten) zweiten Luftstrom 109 überströmten Oberfläche in Form einer Unterbodenfläche 102.3 auf der Unterseite 102.4 des Wagenkastens 102. Die Auslassöffnung 107.4 ist im Bereich eines im Wesentlichen konvex geformten Übergangs 110 der Unterbodenfläche 102.3 in den Fahrwerksausschnitt 106 angeordnet. Diese Anordnung der Auslassöffnung hat nicht zuletzt den Vorteil, dass sich in diesem Bereich besonders günstige Platzverhältnisse für die Anordnung der Auslassöffnung ergeben.

Die Auslassöffnung ist im Bereich des Übergangs 110 zwischen der (einen ersten Oberflächenabschnitt bildenden) Unterbodenfläche 102.3 und der (im ersten Betriebsmodus) nachlaufenden (einen zweiten Oberflächenabschnitt bildenden) Begrenzungswand 106.2 in einem (im ersten Betriebsmodus) nachlaufenden Randbereich des Fahrwerksausschnitts 106 angeordnet, der im Wesentlichen in der Fahrzeugquerrichtung verläuft.

Wie den Figuren 1 und 2 zu entnehmen ist, bildet die Außenhaut 102.1 des Wagenkastens 102 am unteren Ende der vorlaufenden Begrenzungswand 106.1 in dem ersten Betriebsmodus eine Strömungsabrisskante aus, an welcher sich der zweite Luftstrom 109 (der die Unterseite 102.4 des Wagenkastens 102 vom freien Fahrzeugende zum Fahrwerksausschnitt 106 hin überstreicht) bei der Nennbetriebsgeschwindigkeit des Fahrzeugs 101 (aber auch bei darunter liegenden Fahrgeschwindigkeiten) von der Außenhaut 102.1, also der Oberfläche des Wagenkastens 102, unter Ausbildung einer Scherschicht ablöst.

Der zweite Luftstrom 109 taucht hinter der Strömungsabrisskante 110 zunächst in der Fahrzeughöhenrichtung (z-Richtung) leicht in den Fahrwerksausschnitt 106 ein, erreicht dann die Komponenten des Fahrwerks 103, an welche er sich abschnittsweise erneut anlegt. Am nachlaufenden Ende des Fahrwerks 103 löst sich der daran anliegende Teil des zweiten Luftstroms 109 unter erneuter Ausbildung einer Scherschicht vom Fahrwerk 103, wobei er wiederum in der Fahrzeughöhenrichtung (z-Richtung) in den Fahrwerksausschnitt 106 eintaucht.

Der in den Fahrwerksausschnitt eintauchende Teil des zweiten Luftstroms 109 trifft nunmehr auf die nachlaufenden Begrenzungswand 106.2 des Fahrwerksausschnitts 106 und legt sich wiederum an diese an. Anschließend überströmt der zweite Luftstrom 109 den Übergang 110 und überströmt nachfolgend den Fahrzeugunterboden 102.3.

An dem im Wesentlichen konvex geformten Übergang 110 von der Begrenzungswand 106.2 zu dem Fahrzeugunterboden 102.3 erfährt der zweite Luftstrom 109 nunmehr (bei sämtlichen zu erwartenden Anströmungsverhältnissen im Normalbetrieb) eine Strömungsumlenkung, welche in im Bereich des Übergangs 110 auf der Fahrzeugoberfläche 102.1 zu einem Abfall des statischen Drucks in dem zweiten Luftstrom 109 gegenüber dem (in der Umgebung des Fahrzeugs 101 vorherrschenden) Umgebungsluftdruck führt.

Wie der Figur 1 weiterhin zu entnehmen ist, wird der Bereich der Einlassöffnungen 107.3 ebenfalls von einem Luftstrom, nämlich einem dritten Luftstrom 111 überströmt. Je nach der Gestaltung der Seitenwand 102.2, insbesondere je nach der Krümmung der Seitenwand 102.2, im Bereich der Einlassöffnungen 107.3 kann auch der an der Seitenwand 102.2 anliegende dritte Luftstrom 111 gegebenenfalls eine leichte Strömungsumlenkung erfahren, welche zu einem Abfall des statischen Drucks in dem dritten Luftstrom 111 gegenüber dem Umgebungsluftdruck führt.

Die Strömungsumlenkung des zweiten Luftstroms 109 im Bereich des Übergangs 110 ist jedoch deutlich ausgeprägter als die Strömungsumlenkung des dritten Luftstroms 111 im Bereich der Einlassöffnungen 107.3. Demgemäß ist der Abfall des statischen Drucks in dem zweiten Luftstrom 109 gegenüber der Umgebung und insbesondere gegenüber dem im Bereich der Einlassöffnungen 107.3 vorherrschenden statischen Druck so groß, dass die sich ergebende negative Druckdifferenz zwischen Auslass und Einlass in vorteilhafter Weise die Luftförderung des ersten Luftstroms 108 in der gewünschten Förderrichtung aus dem zweiten Kühlluftkanal 107.2 heraus unterstützt. Mithin ist es hiermit also auf rein passive Weise möglich, die für den tatsächlich zu fördernden ersten Kühlluftstrom 108 gegebenenfalls erforderliche aktive Förderleistung der Klimaanlage 107 zu reduzieren bzw. auf einem niedrigen Niveau zu halten.

Wie der Figur 1 zu entnehmen ist, ist der durch die nachlaufenden Begrenzungswand 106.2 gebildete zweite Oberflächenabschnitt des Übergangs 110 gegenüber dem durch den Fahrzeugunterboden 102.3 gebildeten ersten Oberflächenabschnitt nach Art einer Fase um einen spitzen Neigungswinkel geneigt angeordnet. Diese Gestaltung hat den Vorteil, dass in die im Nachlauf des Fahrwerks 103 in dem zweiten Luftstrom 109 bildende Scherschicht (je nach gewähltem Neigungswinkel) beim Auftreffen auf den zweiten Oberflächenabschnitt 106.2 (im Vergleich zu einer vertikal angeordneten Begrenzungswand) ein geringerer Impuls eingeleitet wird, sodass sich der Luftstrom 109 schneller wieder an die Oberfläche 102.1 anlegen kann und dort eine widerstandsarme Grenzschicht ausbilden kann, welche der Änderung der Strömungsrichtung im Bereich des Übergangs 110 folgen kann.

Je nach Größe des Neigungswinkels $\alpha$ zwischen dem ersten Oberflächenabschnitt 102.3 und dem zweiten Oberflächenabschnitt 106.2 kann es zwar beim Überströmen des Übergangs 110 in dessen Nachlauf zu einer erneuten lokalen bzw. temporären Ablösung (in Form einer so genannten Ablöseblase) kommen, diese fällt jedoch wegen der günstigeren Neigung zwischen dem ersten Oberflächenabschnitt 102.3 und dem zweiten Oberflächenabschnitt 106.2 vergleichsweise gering aus und hat insbesondere auf die Absenkung keinen nennenswerten Einfluss auf die Absenkung des statischen Luftdrucks im Bereich der Auslassöffnung 107.4.

Der erste Oberflächenabschnitt 102.3 definiert eine lokale erste Tangentialebene (die im folgenden Beispiel aufgrund der im Wesentlichen ebenen Gestaltung des ersten Oberflächenabschnitts 102.3 mit diesem zusammenfällt) sowie eine lokale erste Flächennormale. Gleichermaßen definiert der zweite Oberflächenabschnitt 106.2 eine lokale zweite Tangentialebene (die im folgenden Beispiel aufgrund der im Wesentlichen ebenen Gestaltung des zweiten Oberflächenabschnitts 106.2 mit diesem zusammenfällt) sowie eine lokale zweite Flächennormale. Die lokale erste Flächennormale definiert mit der lokalen zweiten Flächennormale eine lokale Normalebene, welche im vorliegenden Beispiel parallel zur Zeichnungsebene der Figur 1 verläuft.

Der zweite Oberflächenabschnitt 106.2 ist um einen spitzen Neigungswinkel $\alpha$ zu dem ersten Oberflächenabschnitt 102.3 geneigt angeordnet, wobei der spitze Neigungswinkel im vorliegenden Beispiel $\alpha = 45°$ beträgt. Durch eine derartige Gestaltung lässt sich das oben bereits beschriebene sanfte und schnelle Wiederanlegen der zweiten Strömung 109 an den zweiten Oberflächenabschnitt 106.2 erzielen, bevor die Auslassöffnung 107.4 überstrichen wird.

Hierbei in ist anzumerken, dass die jeweilige Tangente an die lokale Geometrie der Außenhaut bzw. Fahrzeugoberfläche 102.1 nicht notwendigerweise in jedem Punkt exakt mit der ersten bzw. zweiten Tangentialebene zusammenfallen muss. Vielmehr sind lokale Abweichungen im Bereich der Außenhaut 102.1 möglich (die beispielsweise durch Unregelmäßigkeiten der Außenhaut 102.1 in Form von lokalen Rippen, Kanten oder Dellen etc. bedingt sind). Es muss lediglich gewährleistet sein, dass diese lokalen Abweichungen keine nennenswerten Auswirkungen auf den globalen Strömungsverlauf des zweiten Luftstroms 109 im grenzschichtnahen Bereich haben.

Im vorliegenden Beispiel herrscht im Normalbetrieb des Fahrzeugs 101 bei seiner Nennbetriebsgeschwindigkeit über der Einlassfläche der Einlassöffnung 107.3 ein mittlerer statischer Einlassluftdruck $p_{Einlass}$, während über der Auslassfläche der Auslassöffnung 107.4 zur gleichen Zeit ein mittlerer statischer Auslassluftdruck $p_{Auslass}$ herrscht. Hierbei ergibt sich wie oben beschrieben (gemäß der Gleichung 1) eine negative Druckdifferenz

$$\Delta p_{AE} = p_{Auslass} - p_{Einlass},$$

welche gegebenenfalls sogar ausreichen kann, um alleine den ersten Kühlluftstrom 108 durch das Luftkanalsystem des Kühlmittelkreislaufs der Klimaanlage 107 zu fördern. Hierdurch kann der Aufwand für aktive Einrichtungen zur Luftförderung in der Klimaanlage 107 gering gehalten werden.

Der Absolutbetrag $|\Delta p_{AE}|$ der (negativen) Druckdifferenz $\Delta p_{AE}$ beträgt bei sämtlichen im Normalbetrieb (bei Nennbetriebsgeschwindigkeit) des Fahrzeugs 101 zu erwartenden Anströmbedingungen mindestens 50 Pa, unter Seitenwindeinfluss sogar mindestens 100 Pa, sodass eine besonders günstige Konfiguration mit minimiertem Zusatzaufwand für aktive Fördereinrichtungen der Klimaanlage 107 erzielt wird.

Wie den Figuren 1 und 2 zu entnehmen ist, grenzt die in dem ersten Oberflächenabschnitt 102.3 vorgesehene Auslassöffnung 107.4 im vorliegenden Beispiel in der Fahrzeuglängsrichtung unmittelbar an den Rand des Fahrwerksausschnitts 106, mithin also den Übergang 110 zwischen dem ersten Oberflächenabschnitt 102.3 und dem zweiten Oberflächenabschnitt 106.2 an. Dies ist insoweit von Vorteil, als gerade am Übergang 110 und in dessen unmittelbarer Nachbarschaft die größte Absenkung des statischen Drucks in dem zweiten Luftstrom 109 auftritt.

Der Abstand des (dem Übergang 110 zugewandten) Randbereichs der Auslassöffnung 107.4 ist generell so gering wie möglich gewählt, wobei in der Regel die strukturelle Konstruktion der Außenhaut 102.1 an dieser Stelle die Grenzen der Annäherung vorgibt.

Es versteht sich jedoch, dass bei anderen Varianten der Erfindung auch ein gewisser größerer Abstand des Randbereichs der Auslassöffnung 107.4 von den Übergang 110 vorgesehen sein kann. Vorzugsweise beträgt diese jedoch weniger als 200 mm, weiter vorzugsweise weniger als 100 mm, weiter vorzugsweise weniger als 50 mm, um die Druckabsenkung im Bereich des Übergangs 110 möglichst weit gehend auszunutzen.

Weiterhin versteht es sich, dass die Auslassöffnung bei anderen Varianten der Erfindung gegebenenfalls auch im Bereich des zweiten Oberflächenabschnitts angeordnet sein kann. Auch hier gelten dann die obigen Angaben hinsichtlich des Abstands der Auslassöffnung von dem Übergang.

Wie der Figur 2 zu entnehmen ist, erstreckt sich der Fahrwerksausschnitt 106 im Bereich des Übergangs 110 in der Fahrzeugquerrichtung über eine Ausschnittsbreite BC, während die Auslassöffnung 107.4 eine Auslassfläche mit einem Auslassflächenschwerpunkt 107.6 definiert.

Die Auslassöffnung 107.4 ist im vorliegenden Beispiel gegenüber der Längsmittenebene 101.3 (welche die Fahrzeugslängsachse 101.2 enthält und parallel zur xz-Ebene verläuft) seitlich nach außen versetzt angeordnet. Hierzu weist Auslassflächenschwerpunkt 107.6 in der in der Fahrzeugquerrichtung einen Auslassschwerpunktabstand DOC von der Längsmittenebene 101.3 auf, der im vorliegenden Beispiel etwa 36% der Ausschnittsbreite BA beträgt.

Diese von der Längsmittenebene 101.3 seitlich nach außen beabstandete Anordnung der Auslassöffnung 107.4 trägt in vorteilhafter Weise dem Umstand Rechnung, dass sich bei dem Fahrwerk 103 in den in Fahrzeugquerrichtung weiter außen gelegenen Bereichen im Fahrwerksausschnitt 106 im Hinblick auf die gewünschte Absenkung des statischen Luftdrucks des zweiten Luftstroms 109 im Bereich der Auslassöffnung 107.4 günstigere Strömungsverhältnisse ergeben als im Bereich der Längsmittenebene 101.3.

Die günstigeren Strömungsverhältnisse ergeben sich nicht zuletzt aus der Tatsache, dass zentraler gelegene Bereiche des Fahrwerks 103 erhebliche Störungen in die Strömung einbringen. Im vorliegenden Beispiel ist der seitliche Abstand DOC so gewählt, dass der Auslassflächenschwerpunkt 107.6 in der Fahrzeugquerrichtung weiter von der Längsmittenebene 101.3 entfernt angeordnet ist als der Radaufstandspunkt 103.2 des unmittelbar benachbarten Rades 103.3 des Fahrwerks 103.

Demgemäß liegt ein überwiegender Teil der Auslassöffnung 107.4 außerhalb des Windschattens des unmittelbar benachbarten Rades 103.3, wodurch die beschriebenen günstigeren Strömungsverhältnisse erzielt werden. Hierbei liegen im vorliegenden Beispiel etwa 70% der Auslassfläche der Auslassöffnung 107.4 in der Fahrzeugquerrichtung weiter von der Längsmittenebene entfernt als der Radaufstandspunkt 103.2 des unmittelbar benachbarten Rades 103.3, sodass im Bereich eines entsprechend überwiegenden Teils der Auslassöffnung 107.4 entsprechend günstige Strömungsverhältnisse vorliegen.

Wie bereits erwähnt, kann die Auslassöffnung 107.4 bzw. der Auslassflächenschwerpunkt 107.6 bei anderen Varianten grundsätzlich auch an beliebigen anderen geeigneten Stellen entlang der Fahrzeugquerrichtung vorgesehen sein. Insbesondere kann die Auslassöffnung 107.4 bzw. der Auslassflächenschwerpunkt 107.6 im Wesentlichen mittig, d.h. im Bereich der Längsmittenebene, liegen.

Die Abmessungen der Auslassöffnung 107.4 sind im vorliegenden Beispiel in Abhängigkeit von dem zu erzielenden Volumenstrom der ersten Luftströmung 108 gewählt. So beträgt im vorliegenden Beispiel die maximale Auslassbreite $BO_{max}$ der Auslassöffnung 107.4 in der Fahrzeugquerrichtung etwa 450 mm und damit 21% der Ausschnittsbreite BC, während die maximale Auslasslänge $LO_{max}$ der Auslassöffnung 107.4 in der Fahrzeuglängsrichtung etwa 205 mm beträgt.

Die Auslassöffnung ist bevorzugt als entlang des Übergangs 110 langgestreckte Öffnung gestaltet, um die vorteilhaften Druckbedingungen nahe an dem Übergang 110 möglichst weit gehend auszunutzen und schon mit vergleichsweise geringem statischem Unterdruck im Bereich der Auslassöffnung 107.4 eine vergleichsweise gute Unterstützung der Förderung größerer Volumenströme 108 zu erzielen. Im vorliegenden Beispiel beträgt die maximale Auslassbreite $BO_{max}$ daher etwa 220% der maximalen Auslasslänge $LO_{max}$.

Wie der Figur 3 zu entnehmen ist, ist die Auslassöffnung 107.4 im vorliegenden Beispiel durch ein gitterartig oder grillartig gestaltetes Auslasselement 107.7 gebildet, welches eine Vielzahl von Durchlassöffnungen 107.8 für den ersten Luftstrom aufweist.

Die Durchlassöffnungen 107.8 können grundsätzlich auf beliebige geeignete Weise gestaltet sein. Im vorliegenden Beispiel sind sie als langgestreckte, schlitzartige Öffnungen nach Art eines Langlochs mit abschnittsweise geradliniger und abschnittsweise gekrümmter Außenkontur ausgebildet. Die Haupterstreckungsrichtung der Durchlassöffnungen 107.8 verläuft dabei in der Fahrzeugquerrichtung, mithin also auch quer zu dem zweiten Luftstrom 109 bzw. zur Fahrtrichtung des Fahrzeugs 101.

Hierdurch wird in vorteilhafter Weise eine Gestaltung erzielt, bei welcher der zweite Luftstrom 109 nur in vergleichsweise kurze Strecke (quer zur Haupterstreckungsrichtung der jeweiligen Durchlassöffnung 107.8) überspringen bzw. überbrücken muss, bevor er sich wieder an die zwischen den Durchlassöffnungen 107.8 ausgebildeten Stege 107.9 des Auslasselement 107.7 anlegen kann. Hierdurch kommt es in vorteilhafter Weise zu keiner Ausbildung einer ausgeprägten turbulenten Scherschicht in dem zweiten Luftstrom 109. Der zweite Luftstrom 109 kann das Auslasselement 107.7 daher insoweit im Wesentlichen ungestört überströmen.

Die Anzahl und Größe der Durchlassöffnungen 107.8, insbesondere deren Abmessung in der Fahrzeuglängsrichtung ist so gewählt, dass sich möglichst geringe Druckverluste beim Durchtritt des ersten Luftstroms 108 durch die Durchlassöffnungen ergeben, ohne dass es zu einer nennenswerten Störung des zweiten Luftstroms 109 kommt.

Die vorliegende Erfindung wurde vorstehend ausschließlich im Zusammenhang mit einem Beispiel für eine Klimaanlage eines Fahrzeugs beschrieben. Es versteht sich jedoch, dass sie auch im Zusammenhang mit beliebigen anderen Einrichtungen eines Fahrzeugs Verwendung finden kann, welche zur Förderung von Luft in dem bzw. durch das Fahrzeug vorgesehen sind. So kann die Erfindung beispielsweise auch für beliebige andere Kühleinrichtungen anderer Fahrzeugkomponenten zur Anwendung kommen. Ebenso kann sie natürlich auch im Zusammenhang mit der Zirkulation von für den Passagierraum des Fahrzeugs vorgesehenen Luftmassen Anwendung finden.

Die vorliegende Erfindung wurde vorstehend ausschließlich anhand eines Beispiels eines Fahrzeugs für einen Triebzug für den Hochgeschwindigkeitsverkehr beschrieben. Es versteht sich jedoch, dass die Erfindung auch im Zusammenhang mit anderen Schienenfahrzeugen zum Einsatz kommen kann, welche für andere Geschwindigkeitsbereiche vorgesehen sind.

Weiterhin wurde die Erfindung ausschließlich im Zusammenhang mit Schienenfahrzeugen beschrieben. Es versteht sich jedoch, dass sie auch im Zusammenhang mit beliebigen anderen Fahrzeugen zur Reduzierung des Aufwands für aktive Einrichtungen zur Luftzirkulation zum Einsatz kommen kann.

**Patentansprüche**

1. Fahrzeug, insbesondere Schienenfahrzeug für den Hochgeschwindigkeitsverkehr, mit

   - einem Wagenkasten (102) und
   - einem Luftkanal (107.2) zum Leiten eines ersten Luftstroms (108) in dem Wagenkasten (102), wobei
   - der Luftkanal (107.2) eine Auslassöffnung (107.4) aufweist, die in einem Auslassbereich (107.5) an einer im Betrieb des Fahrzeugs durch einen zweiten Luftstrom (109) überströmten Oberfläche (102.1) des Wagenkastens (102) in eine Umgebung des Wagenkastens (102) mündet,
   **dadurch gekennzeichnet, dass**
   - die Auslassöffnung (107.4) im Bereich eines im Wesentlichen konvex geformten Übergangs (110) der Oberfläche (102.1) in eine Einbuchtung (106) der Oberfläche (102.1) angeordnet ist.

2. Fahrzeug nach Anspruch 1, **dadurch gekennzeichnet, dass**

   - der Übergang (110) im Bereich eines in einer Fahrzeugquerrichtung verlaufenden Randbereichs der Einbuchtung (106) angeordnet ist
und/oder
- der Übergang (110) an einem in einer Fahrzeuglängsrichtung vorlaufenden oder nachlaufenden Randbereich der Einbuchtung (106) angeordnet ist.

3.  Fahrzeug nach Anspruch 1 oder 2, **dadurch gekennzeichnet, dass**

- die Auslassöffnung (107.4) in einem in einer Fahrzeughöhenrichtung unteren Bereich der des Wagenkastens (102) angeordnet ist, wobei
- die Auslassöffnung (107.4) insbesondere auf einer Unterseite des Wagenkastens (102) angeordnet ist.

4.  Fahrzeug nach einem der Ansprüche 1 bis 3, **dadurch gekennzeichnet, dass**

- die Einbuchtung (106) ein Fahrwerksausschnitt für ein Fahrwerk (103) des Fahrzeugs ist, wobei
- der Übergang (110) insbesondere an einem in einer Fahrzeuglängsrichtung vorlaufenden oder nachlaufenden Randabschnitt des Fahrwerksausschnitts (106) angeordnet ist.

5.  Fahrzeug nach Anspruch 4, **dadurch gekennzeichnet, dass**

- der Wagenkasten (102) eine Längsmittenebene definiert, die sich in einer Fahrzeuglängsrichtung und einer Fahrzeughöhenrichtung erstreckt, wobei
- sich der Fahrwerksausschnitt (106) im Bereich des Übergangs (110) in einer Fahrzeugquerrichtung über eine Ausschnittsbreite erstreckt;
- die Auslassöffnung (107.4) eine Auslassfläche mit einem Auslassflächenschwerpunkt (107.6) definiert;
- der Auslassflächenschwerpunkt (107.6) in der Fahrzeugquerrichtung einen Auslassschwerpunktabstand von der Längsmittenebene aufweist, der 10% bis 50% der Ausschnittsbreite beträgt, vorzugsweise 20% bis 45% der Ausschnittsbreite beträgt, weiter vorzugsweise 30% bis 40% der Ausschnittsbreite beträgt,

6.  Fahrzeug nach Anspruch 4 oder 5, **dadurch gekennzeichnet, dass**

- sich der Fahrwerksausschnitt (106) im Bereich des Übergangs (110) in einer Fahrzeugquerrichtung über eine Ausschnittsbreite erstreckt;
- die Auslassöffnung (107.4) in der Fahrzeugquerrichtung eine maximale Auslassbreite definiert;
- die maximale Auslassbreite 5% bis 30% der Ausschnittsbreite beträgt, vorzugsweise 10% bis 25% der Ausschnittsbreite beträgt, weiter vorzugsweise 15% bis 20% der Ausschnittsbreite beträgt,

7.  Fahrzeug nach einem der Ansprüche 4 bis 6, **dadurch gekennzeichnet, dass**

- die Auslassöffnung (107.4) in einer Fahrzeugquerrichtung eine maximale Auslassbreite definiert;
- die Auslassöffnung (107.4) in einer Fahrzeuglängsrichtung eine maximale Auslasslänge definiert;
- die maximale Auslassbreite 120% bis 320% der maximalen Auslasslänge beträgt, vorzugsweise 160% bis 280% der maximalen Auslasslänge beträgt, weiter vorzugsweise 200% bis 240% der maximalen Auslasslänge beträgt, wobei
- die maximale Auslassbreite insbesondere 300 mm bis 600 mm beträgt, vorzugsweise 350 mm bis 550 mm beträgt, weiter vorzugsweise 400 mm bis 500 mm beträgt.

8.  Fahrzeug nach einem der Ansprüche 4 bis 6, **dadurch gekennzeichnet, dass**

- in dem Bereich des Fahrwerksausschnitts (106) ein Fahrwerk (103) mit wenigstens einer Radeinheit mit zwei Rädern (103.3) angeordnet ist und
- der Wagenkasten (102) eine Längsmittenebene (101.3) definiert, die sich in einer Fahrzeuglängsrichtung und einer Fahrzeughöhenrichtung erstreckt, wobei
- die Auslassöffnung (107.4) eine Auslassfläche mit einem Auslassflächenschwerpunkt (107.6) definiert;
- der Auslassflächenschwerpunkt (107.6) in einer Fahrzeugquerrichtung weiter von der Längsmittenebene (101.3) entfernt angeordnet ist als ein Radaufstandspunkt (103.2) des unmittelbar benachbarten Rades (103.3) der Radeinheit;
- insbesondere wenigstens 60% der Auslassfläche, vorzugsweise wenigstens 80% der Auslassfläche, weiter vorzugsweise wenigstens 90% der Auslassfläche, in der Fahrzeugquerrichtung weiter von der Längsmittenebene entfernt angeordnet sind als der Radaufstandspunkt (103.2) des unmittelbar benachbarten Rades (103.3) der Radeinheit.

9. Fahrzeug nach einem der Ansprüche 1 bis 8, **dadurch gekennzeichnet, dass**

- die Auslassöffnung (107.4) durch wenigstens ein Auslasselement (107.7) gebildet ist, wobei
- das Auslasselement (107.7) wenigstens eine Durchlassöffnung (107.8) für den ersten Luftstrom (108) aufweist;
- das Auslasselement (107.7) insbesondere derart ausgebildet ist, dass der zweite Luftstrom (109) die Durchlassöffnung (107.8) in einem Normalbetrieb des Fahrzeugs bei seiner Nennbetriebsgeschwindigkeit ohne Ausbildung einer ausgeprägten turbulenten Scherschicht überspringt und sich wieder an das Auslasselement (107.7) anlegt;
- das Auslasselement (107.7) insbesondere gitterartig oder grillartig mit einer Vielzahl von Durchlassöffnungen (107.8) ausgebildet ist;
- die Durchlassöffnung (107.8) insbesondere mit zumindest abschnittsweise polygonaler Außenkontur und/oder zumindest abschnittsweise gekrümmter Außenkontur ausgebildet ist;
- die Durchlassöffnung (107.8) insbesondere als langgestreckte schlitzartige Öffnung mit einer Haupterstreckungsrichtung ausgebildet ist, die quer zu dem zweiten Luftstrom (109), insbesondere quer zu einer Fahrtrichtung des Fahrzeugs, verläuft.

10. Fahrzeug nach einem der Ansprüche 1 bis 9, **dadurch gekennzeichnet, dass**

- der Übergang (110) durch einen ersten Oberflächenabschnitt (102.3) und einen zweiten Oberflächenabschnitt (106.2) definiert wird, wobei
- der zweite Oberflächenabschnitt (106.2) einen Teil der Einbuchtung (106) bildet und
- der zweite Oberflächenabschnitt (106.2) nach Art einer Fase um einen spitzen Neigungswinkel zu dem ersten Oberflächenabschnitt (102.3) geneigt angeordnet ist.

11. Fahrzeug nach einem der Ansprüche 1 bis 10, **dadurch gekennzeichnet, dass**

- der Übergang (110) durch einen ersten Oberflächenabschnitt (102.3) und einen zweiten Oberflächenabschnitt (106.2) definiert wird, wobei
- der zweite Oberflächenabschnitt (106.2) einen Teil der Einbuchtung (106) bildet und
- der erste Oberflächenabschnitt (102.3) eine lokale erste Tangentialebene und eine lokale erste Flächennormale definiert,
- der zweite Oberflächenabschnitt (106.2) eine lokale zweite Tangentialebene und eine lokale zweite Flächennormale definiert,
- die lokale erste Flächennormale mit der lokalen zweiten Flächennormale eine lokale Normalebene definiert und
- der zweite Oberflächenabschnitt (106.2) um einen spitzen Neigungswinkel zu dem ersten Oberflächenabschnitt (102.3) geneigt angeordnet ist, wobei
- der spitze Neigungswinkel insbesondere 10° bis 80° beträgt, vorzugsweise 30° bis 60° beträgt, weiter vorzugsweise 40° bis 50° beträgt, insbesondere im Wesentlichen 45° beträgt.

12. Fahrzeug nach einem der Ansprüche 1 bis 11, **dadurch gekennzeichnet, dass**

- das Fahrzeug in einem Normalbetrieb bei einer Nennbetriebsbeschwindigkeit betrieben wird,
- der Luftkanal (107.2) ein Fortluftkanal einer Lüftungseinrichtung (107) ist, die einen Frischluftkanal (107.1) aufweist,
- der Frischluftkanal (107.1) eine Einlassöffnung (107.3) aufweist, die an einer im Normalbetrieb des Fahrzeugs durch einen dritten Luftstrom überströmten Oberfläche (102.1) des Wagenkastens (102) in eine Umgebung des Wagenkastens (102) mündet,
- die Einlassöffnung (107.3) eine Einlassfläche aufweist, an der in dem Normalbetrieb ein mittlerer Einlassluftdruck herrscht,
- die Auslassöffnung (107.4) eine Auslassfläche aufweist, an der in dem Normalbetrieb ein mittlerer Auslassluftdruck herrscht,
- die Einlassöffnung (107.3) und die Auslassöffnung (107.4) derart angeordnet sind dass in dem Normalbetrieb eine negative Druckdifferenz

$$\Delta p_{AE} = p_{Auslass} - p_{Einlass}$$

zwischen dem mittleren Auslassluftdruck P$_{Auslass}$ und dem mittleren Einlassluftdruck P$_{Einlass}$ vorliegt, wobei
- der Absolutbetrag |$\Delta$p$_{AE}$| der Druckdifferenz $\Delta$p$_{AE}$ insbesondere mindestens 20 Pa beträgt, vorzugsweise mindestens 40 Pa beträgt, weiter vorzugsweise mindestens 50 Pa beträgt,
- der Absolutbetrag |$\Delta$p$_{AE}$| der Druckdifferenz $\Delta$p$_{AE}$ insbesondere 20 Pa bis 1500 Pa beträgt, vorzugsweise 40 Pa bis 1400 Pa beträgt, weiter vorzugsweise 50 Pa bis 1300 Pa beträgt.

13. Fahrzeug nach Anspruch 12, **dadurch gekennzeichnet, dass**

- die Einlassöffnung (107.3) im Bereich einer in einer Fahrzeugquerrichtung weisenden Seitenfläche (102.2) des Wagenkastens (102) angeordnet ist, wobei
- die Einlassöffnung (107.3) insbesondere in einer Fahrzeughöhenrichtung oberhalb der Einbuchtung (106) angeordnet ist
und/oder
- die Einlassöffnung (107.3) insbesondere in einer Fahrzeuglängsrichtung im Bereich der Einbuchtung (106), insbesondere zwischen einem vorlaufenden Ende und einem nachlaufenden Ende der Einbuchtung (106), angeordnet ist

14. Fahrzeug nach einem der Ansprüche 1 bis 13, **dadurch gekennzeichnet, dass**

- der Luftkanal (107.2) ein Fortluftkanal einer Klimatisierungseinrichtung (107) für einen Innenraum des Wagenkastens (102) ist, wobei
- die Klimatisierungseinrichtung (107) insbesondere im Bereich eines Kopfendes (105) des Wagenkastens (102) angeordnet ist,
- die Klimatisierungseinrichtung (107) insbesondere einem Führerstand (105.1) des Wagenkastens (102) zugeordnet ist.

15. Fahrzeug nach einem der Ansprüche 1 bis 14, **dadurch gekennzeichnet, dass** es ein Fahrzeug für den Hochgeschwindigkeitsverkehr mit einer Nennbetriebsgeschwindigkeit oberhalb von 250 km/h, insbesondere oberhalb von 300 km/h, insbesondere von 320 km/h bis 390 km/h ist.

**Claims**

1. Vehicle, in particular rail vehicle for high-speed traffic, with

- a wagon body (102) and
- an air duct (107.2) for directing a first air flow (108) in the wagon body (102),
- the air duct (107.2) having an outlet opening (107.4), which opens into an environment of the wagon body (102) in an outlet area (107.5) on a surface (102.1) of the wagon body (102) over which a second air stream (109) flows during operation of the vehicle,
**characterized in that**
- the outlet opening (107.4) is arranged in the region of an essentially convex transition (110) of the surface (102.1) into an indentation (106) of the surface (102.1).

2. Vehicle according to claim 1, **characterized in that**

- the transition (110) is arranged in the region of an edge region of the indentation (106) running in a vehicle transverse direction,
and/or
- the transition (110) is arranged in an edge region of the indentation (106) which leads or trails in a vehicle longitudinal direction.

3. Vehicle according to claim 1 or 2, **characterized in that**

- the outlet opening (107.4), in a vehicle height direction, is arranged in a lower region of the wagon body (102), wherein
- the outlet opening (107.4), in particular, is arranged on an underside of the wagon body (102).

4. Vehicle according to one of Claims 1 to 3, **characterized in that**

- the indentation (106) is a running gear cut-out for a running gear (103) of the vehicle,
- the transition (110), in particular, being arranged at an edge section of the running gear cut-out (106) which leads or trails in a vehicle longitudinal direction.

5. Vehicle according to claim 4, **characterized in that**

- the wagon body (102) defines a longitudinal center plane which extends in a vehicle longitudinal direction and in a vehicle height direction, wherein
- the running gear cut-out (106), in the region of the transition (110), extends over a cut-out width in a vehicle transverse direction;
- the outlet opening (107.4) defines an outlet surface with an outlet surface area center of gravity (107.6);
- the outlet surface area center of gravity (107.6), in the vehicle transverse direction, has an outlet center of gravity distance from the longitudinal center plane which is 10% to 50% of the cut-out width, preferably 20% to 45% of the cut-out width, further preferably 30% to 40% of the cut-out width.

6. Vehicle according to claim 4 or 5, **characterized in that**

- the running gear cut-out (106), in the region of the transition (110), extends in a vehicle transverse direction over a cut-out width;
- the outlet opening (107.4), in the vehicle transverse direction, defines a maximum outlet width;
- the maximum outlet width is 5% to 30% of the cut-out width, preferably 10% to 25% of the cut-out width, further preferably 15% to 20% of the cut-out width.

7. Vehicle according to one of claims 4 to 6, **characterized in that**

- the outlet opening (107.4), in the vehicle transverse direction, defines a maximum outlet width;
- the outlet opening (107.4), in the vehicle longitudinal direction, defines a maximum outlet length;
- the maximum outlet width is 120% to 320% of the maximum outlet length, preferably 160% to 280% of the maximum outlet length, further preferably 200% to 240% of the maximum outlet length;
- the maximum outlet width, in particular, being 300 mm to 600 mm, preferably 350 mm to 550 mm, more preferably 400 mm to 500 mm.

8. Vehicle according to one of claims 4 to 6, **characterized in that**

- in the area of the running gear cut-out (106) a running gear (103) with at least one wheel unit with two wheels (103.3) is arranged and
- the wagon body (102) has a longitudinal center plane (101.3), which extends in a vehicle longitudinal direction and a vehicle height direction, wherein
- the outlet opening (107.4) defines an outlet surface with an outlet surface area center of gravity (107.6);
- the outlet surface area center of gravity (107.6), in the vehicle transverse direction, is arranged further away from the longitudinal center plane (101.3) than a wheel contact point (103.2) of the immediately adjacent wheel (103.3) of the wheel unit;
- in particular, in the transverse direction, at least 60% of the outlet area, preferably at least 80% of the outlet area, further preferably at least 90% of the outlet area, are arranged further away from the longitudinal center plane of the vehicle than the wheel contact point (103.2) of the immediately adjacent wheel (103.3) of the wheel unit.

9. Vehicle according to one of claims 1 to 8, **characterized in that**

- the outlet opening (107.4) is formed by at least one outlet element (107.7), wherein
- the outlet element (107.7) has at least one passage opening (107.8) for the first air flow (108);
- the outlet element (107.7), in particular, is designed in such a way that the second air flow (109), during normal operation of the vehicle at its nominal operating speed, jumps over the passage opening (107.8) without forming a pronounced turbulent shear layer and reattaches to the outlet element (107.7);
- the outlet element (107.7), in particular, is designed in a grid-like or grill-like manner with a large number of passage openings (107.8);
- the passage opening (107.8), in particular, is designed with an at least section-wise polygonal outer contour and/or an at least section-wise curved outer contour;
- the passage opening (107.8), in particular, is designed as an elongated slot-like opening with a main direction of extension which extends transversely to the second air flow (109), in particular transversely to a direction of travel of the vehicle.

**10.** Vehicle according to one of claims 1 to 9, **characterized in that**

- the transition (110) is defined by a first surface section (102.3) and a second surface section (106.2), wherein
- the second surface section (106.2) is part of the indentation (106) and
- the second surface section (106.2) is arranged inclined in the manner of a chamfer by an acute angle of inclination to the first surface section (102.3).

**11.** Vehicle according to one of claims 1 to 10, **characterized in that**

- the transition (110) is defined by a first surface section (102.3) and a second surface section (106.2), wherein
- the second surface section (106.2) is part of the indentation (106) and
- the first surface section (102.3) defines a local first tangential plane and a local first surface normal,
- the second surface section (106.2) defines a local second tangential plane and a local second surface normal,
- the local first surface normal and the local second surface normal together define a local normal plane and
- the second surface section (106.2) is inclined with respect to the first surface section (102.3) by an acute angle, wherein
- the acute angle, in particular, is 10° to 80°, preferably 30° to 60°, more preferably 40° to 50°, in particular, essentially 45°.

**12.** Vehicle according to one of claims 1 to 11, **characterized in that**

- the vehicle, in normal operation, is operated at a nominal operating speed,
- the air duct (107.2) is an exhaust air duct of a ventilation device (107) which has a fresh air duct (107.1),
- the fresh air duct (107.1) has an inlet opening (107.3) which opens into a surrounding area of the wagon body (102) on a surface (102.1) of the wagon body (102) over which a third air stream flows during normal operation of the vehicle,
- the inlet opening (107.3) has an inlet surface at which there is a medium inlet air pressure in normal operation,
- the outlet opening (107.4) has an outlet surface at which there is a medium outlet air pressure in normal operation,
- the inlet opening (107.3) and the outlet opening (107.4) are arranged such that in the normal operation a negative pressure difference

$$\Delta p_{AE} = \Delta p_{outlet} - \Delta p_{inlet}$$

- is present between the mean outlet air pressure $p_{outlet}$ and the mean inlet air pressure $p_{inlet}$, where
- the absolute amount $|\Delta p_{AE}|$ of the pressure difference $\Delta p_{AE}$, in particular, is at least 20 Pa, preferably is at least 40 Pa, more preferably is at least 50 Pa,
- the absolute amount $|\Delta p_{AE}|$ of the pressure difference $\Delta p_{AE}$, in particular, is 20 Pa to 1500 Pa, preferably 40 Pa to 1400 Pa, more preferably 50 Pa to 1300 Pa.

**13.** Vehicle according to claim 12, **characterized in that**

- the inlet opening (107.3) is arranged in the region of a side surface (102.2) of the wagon body (102) pointing in a transverse direction of the vehicle, the inlet opening (107.3), in particular, being located, in a vehicle height direction, above the indentation (106),
and/or
- the inlet opening (107.3), in particular, in a vehicle longitudinal direction, is arranged in the region of the indentation (106), in particular between a leading end and a trailing end of the indentation (106).

14. Vehicle according to one of claims 1 to 13, **characterized in that**

- the air duct (107.2) is an exhaust air duct of an air conditioning device (107) for an interior of the wagon body (102), wherein
- the air conditioning device (107), in particular, is arranged in the region of a head end (105) of the wagon body (102),
- the air conditioning device (107), in particular, being assigned to a driver's cabin (105.1) of the wagon body (102).

15. Vehicle according to one of claims 1 to 14, **characterized in that** it is a vehicle for high-speed traffic with a nominal operating speed above 250 km/h, in particular above 300 km/h, in particular from 320 km/h to 390 km/h.

**Revendications**

1. Véhicule, en particulier véhicule ferroviaire pour circulation à grande vitesse, avec

- une caisse de wagon (102) et
- un conduit d'air (107.2) pour diriger un premier flux d'air (108) dans la caisse de wagon (102),
- le conduit d'air (107.2) ayant une ouverture de sortie (107.4), qui s'ouvre vers un environnement de la caisse de wagon (102) dans une zone de sortie (107.5) au niveau d'une surface (102.1) de la caisse de wagon (102) sur laquelle s'écoule un deuxième flux d'air (109) pendant l'opération du véhicule,
**caractérisé en ce que**
- l'ouverture de sortie (107.4)) est disposée dans la région d'une transition essentiellement convexe (110) de la surface (102.1) vers une indentation (106) de la surface (102.1).

2. Véhicule selon la revendication 1, **caractérisé en ce que**

- la transition (110) est disposée dans la région d'une section de bord de l'indentation (106) s'étendant dans une direction transversale du véhicule,
et/ou
- la transition (110) est disposée dans une section de bord de l'indentation (106) qui mène ou suit dans une direction longitudinale du véhicule.

3. Véhicule selon la revendication 1 ou 2, **caractérisé en ce que**

- l'ouverture de sortie (107.4) est disposée dans une région inférieure de la caisse de wagon du véhicule (102) dans le sens de la hauteur du véhicule, dans laquelle
- l'ouverture de sortie (107.4), en particulier, est disposée sur une face inférieure de la caisse de wagon du véhicule (102).

4. Véhicule selon l'une des revendications 1 à 3, **caractérisé en ce que**

- l'indentation (106) est une découpe de train de roulement pour un train de roulement (103) du véhicule,
- la transition (110), en particulier, étant arrangé au niveau d'une section de bord de la découpe de train de roulement (106) qui mène out suit dans une direction longitudinale du véhicule.

5. Véhicule selon la revendication 4, **caractérisé en ce que**

- la caisse de wagon (102) définit un plan médian longitudinal qui s'étend dans une direction longitudinale du véhicule et dans une direction de hauteur du véhicule, dans lequel
- la section de train de roulement (106), dans la région de la transition (110), s'étend dans une direction transversale du véhicule sur une largeur de découpe;
- l'ouverture de sortie (107.4) définit une surface de sortie avec un centre de gravité de surface (107.6) de la surface de sortie,
- le centre de gravité de surface (107.6) de la surface de sortie, dans la direction transversale du véhicule, ayant une distance de centre de gravité de sortie par rapport au plan médian longitudinal qui est de 10% à 50% de la largeur de découpe, de préférence de 20% à 45% de la largeur de découpe, plus préférablement de 30% à 40% de la largeur de découpe.

6. Véhicule selon la revendication 4 ou 5, **caractérisé en ce que**

- la découpe de train de roulement (106), dans la région de la transition (110), s'étend dans une direction transversale du véhicule sur une largeur de découpe;
- l'ouverture de sortie (107.4), dans la direction transversale du véhicule, définit une largeur maximale de sortie;
- la largeur de sortie maximale est de 5% à 30% de la largeur de découpe, de préférence de 10% à 25% de la largeur de découpe, plus préférablement de 15% à 20% de la largeur de découpe.

7. Véhicule selon l'une des revendications 4 à 6, **caractérisé en ce que**

- l'ouverture de sortie (107.4), dans la direction transversale du véhicule, définit une largeur maximale de sortie;
- l'ouverture de sortie (107.4), dans la direction longitudinale du véhicule, définit une longueur maximale de sortie;
- la largeur maximale de sortie est de 120% à 320% de la longueur maximale de sortie, de préférence 160% à 280% de la longueur maximale de sortie, plus préférablement de 200% à 240% de la longueur maximale de sortie,
- la largeur maximale de sortie, en particulier, étant de 300 mm à 600 mm, de préférence de 350 mm à 550 mm, plus préférablement de 400 mm à 500 mm.

8. Véhicule selon l'une des revendications 4 à 6, **caractérisé en ce que**

- dans la zone de la découpe du train de roulement (106), un train de roulement (103) avec au moins une unité de roues à deux roues (103,3) est disposé et
- la caisse de wagon (102) définit un plan médian longitudinal qui s'étend dans une direction longitudinale du véhicule et dans une direction de hauteur du véhicule, dans lequel
- l'ouverture de sortie (107.4) définit une surface de sortie avec un centre de gravité de surface (107.6) de la surface de sortie,
- le centre de gravité de surface (107.6) de la surface de sortie, dans la direction transversale du véhicule, est disposé plus éloigné du plan médian longitudinal (101.3) qu'un point de contact de roue (103.2) de la roue immédiatement adjacente (103.3) de l'unité de roues;
- en particulier, dans la direction transversale du véhicule, au moins 60% de la surface de sortie, de préférence au moins 80% de la surface de sortie, plus préférablement au moins 90% de la surface de sortie, sont plus éloignés du plan médian longitudinal que le point de contact de roue (103.2) de la roue immédiatement adjacente (103.3) de l'unité de roues.

9. Véhicule selon l'une des revendications 1 à 8, **caractérisé en ce que**

- l'ouverture de sortie (107.4) est formée par au moins un élément de sortie (107.7), dans lequel
- l'élément de sortie (107.7) présente au moins une ouverture de passage (107.8) pour le premier flux d'air (108);
- l'élément de sortie (107.7), en particulier, est conçu de manière que le deuxième flux d'air (109), lors du fonctionnement normal du véhicule à sa vitesse de fonctionnement nominale, saute à travers l'ouverture de passage (107.8) sans former une couche de cisaillement turbulente prononcée et rejoint l'élément de sortie (107.7);
- l'élément de sortie (107.7), en particulier, est conçu à la manière d'une barreaudage ou d'une grille avec un grand nombre d'ouvertures de passage (107.8);
- l'ouverture de passage (107.8), en particulier, est conçue avec un contour extérieur polygonal au moins en sections et/ou un contour extérieur incurvé au moins en sections;
- l'ouverture de passage (107.8), en particulier, est conçue comme une ouverture allongée en forme de fente avec une direction principale d'extension, qui s'étend transversalement au deuxième flux d'air (109), en particulier, transversalement à une direction de déplacement du véhicule.

10. Véhicule selon l'une des revendications 1 à 9, **caractérisé en ce que**

- la transition (110) est définie par une première section de surface (102.3) et une deuxième section de surface (106.2), dans laquelle
- la deuxième section de surface (106.2) fait partie de l'indentation (106) et
- la deuxième section de surface (106.2) est disposée inclinée à la manière d'un chanfrein d'un angle d'inclinaison aigu par rapport à la première section de surface (102.3).

11. Véhicule selon l'une des revendications 1 à 10, **caractérisé en ce que**

- la transition (110) est définie par une première section de surface (102.3) et une deuxième section de surface (106.2), dans laquelle
- la deuxième section de surface (106.2) fait partie de l'indentation (106) et
- la première section de surface (102.3) définit un premier plan tangentiel local et une première normale de surface locale,
- la deuxième section de surface (106.2) définit un deuxième plan tangentiel local et une deuxième normale de surface locale,
- la première normale de surface locale et la deuxième normale de surface locale définissent un plan normal local et
- la seconde section de surface (106.2) est inclinée par rapport à la première section de surface (102.3) par un angle aigu,
- l'angle aigu, en particulier, est de 10° à 80°, de préférence de 30° à 60°, plus préférablement de 40° à 50°, en particulier, essentiellement 45°.

12. Véhicule selon l'une des revendications 1 à 11, **caractérisé en ce que**

- le véhicule est opéré, en fonctionnement normal, à une vitesse de fonctionnement nominale,
- le conduit d'air (107.2) est un conduit d'air d'échappement d'un dispositif de ventilation (107) comportant un conduit d'air frais (107.1),
- le conduit d'air frais (107.1) a une ouverture d'entrée (107.3) qui débouche dans un environnement de la caisse de wagon (102) au niveau d'une surface (102.1) de la caisse de wagon (102) sur laquelle un troisième flux d'air s'écoule pendant le fonctionnement normal du véhicule,
- l'ouverture d'entrée (107.3) a une surface d'entrée au niveau de laquelle il y a une pression d'air d'entrée moyenne en fonctionnement normal,
- l'ouverture de sortie (107.4) a une surface de sortie au niveau de laquelle il y a une pression d'air de sortie moyenne en fonctionnement normal,
- l'ouverture d'entrée (107.3) et l'ouverture de sortie (107.4) sont disposées de telle sorte qu'en le fonctionnement normal une différence de pression négative

$$\Delta p_{AE} = \Delta p_{sortie} - \Delta p_{entrée}$$

- est présente entre la pression moyenne d'air de sortie $p_{sortie}$ et la pression moyenne d'air d'entrée $p_{entrée}$, où
- la quantité absolue $|\Delta p_{AE}|$ de la différence de pression $\Delta p_{AE}$, en particulier, est d'au moins 20 Pa, de préférence d'au moins 40 Pa, plus préférablement d'au moins 50 Pa,
- la quantité absolue $|\Delta p_{AE}|$ de la différence de pression $\Delta p_{AE}$, en particulier, est de 20 Pa à 1500 Pa, de préférence de 40 Pa à 1400 Pa, plus préférablement de 50 Pa à 1300 Pa.

13. Véhicule selon la revendication 12, **caractérisé en ce que**

- l'ouverture d'entrée (107.3) est disposée dans la région d'une surface latérale (102.2) de la caisse de wagon (102) pointant dans une direction transversale du véhicule, l'ouverture d'entrée (107.3), en particulier, étant disposée au-dessus de l'indentation (106) dans une direction de hauteur de véhicule, et/ou
- l'ouverture d'entrée (107.3), en particulier, dans une direction longitudinale du véhicule, est disposée dans la région de l'indentation (106), en particulier entre une extrémité avant et une extrémité arrière de l'indentation (106).

14. Véhicule selon l'une des revendications 1 à 13, **caractérisé en ce que**

- le conduit d'air (107.2) est un conduit d'échappement d'air d'un dispositif de climatisation (107) pour un intérieur de la caisse de wagon (102), dans lequel
- le dispositif de climatisation (107), en particulier, est disposé au niveau d'une extrémité de tête (105) de la caisse de wagon (102),

- le dispositif de climatisation (107), en particulier, étant assigné à une cabine de conduite (105.1) de la caisse de wagon (102).

15. Véhicule selon l'une des revendications 1 à 14, **caractérisé en ce qu'**il est un véhicule à grande vitesse avec une vitesse nominale de fonctionnement supérieure à 250 km/h, en particulier supérieure à 300 km/h, en particulier de 320 km/h à 390 km/h.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2195599 A
- EP 1547897 A1
- JP H05270402 A